# EUROPÄISCHE PATENTSCHRIFT

(11) **EP 3 898 302 B1**
(45) Veröffentlichungstag und Bekanntmachung des Hinweises auf die Patenterteilung: **16.10.2024**
(21) Anmeldenummer: 19832030.1
(22) Anmeldetag: 16.12.2019
(51) Int. Cl.: B60H 1/32, B60H 1/00, B60H 1/14

(54) **VERFAHREN ZUM BETRIEB EINER WÄRMEPUMPE EINES ELEKTRISCHEN KRAFTFAHRZEUGS**
METHOD FOR OPERATING A HEAT PUMP OF AN ELECTRIC MOTOR VEHICLE
PROCÉDÉ POUR FAIRE FONCTIONNER UNE POMPE À CHALEUR D'UN VÉHICULE À MOTEUR ÉLECTRIQUE

(30) Priorität: 21.12.2018 DE 102018133447
(43) Veröffentlichungstag der Anmeldung: 27.10.2021
(73) Patentinhaber: VOLKSWAGEN AG, 38440 Wolfsburg (DE)
(72) Erfinder: ALBRECHT, Jan-Christoph, 38442 Wolfsburg (DE); WESTHÄUSER, Jochen, 38102 Braunschweig (DE); WACHSMUTH, Carsten, 38179 Schwülper (DE)
(74) Vertreter: Gulde & Partner
(86) Internationale Anmeldenummer: PCT/EP2019/085286
(87) Internationale Veröffentlichungsnummer: WO 2020/126999

(56) Entgegenhaltungen:
- EP-A1- 2 960 087
- WO-A1-2018/124788
- DE-A1- 102011 013 856
- DE-A1- 102011 076 897
- DE-A1- 102014 102 078
- DE-A1- 102017 206 135
- DE-B4- 102011 013 856
- US-A1- 2012 122 000
- US-A1- 2015 266 359

## Beschreibung

Die Erfindung betrifft ein Verfahren zum Betrieb einer Wärmepumpe eines elektrischen Kraftfahrzeugs gemäß dem Oberbegriff des Patentanspruchs 1.

Im Bereich von Kraftfahrzeugen kommen Wärmeübertrager vielfältig zum Einsatz, beispielsweise zur Klimatisierung des Kraftfahrzeugs. In dieser Funktion ist es bekannt, Wärmeübertrager als Teil einer Wärmepumpe vorzusehen, mit der zur Klimatisierung des Kraftfahrzeugs Wärme aus der Außenluft gewonnen wird.

Allerdings besteht bei derartigen Wärmepumpen das Problem, dass bei geringen Außentemperaturen der Wärmeübertrager zur Vereisung neigt, da dieser zum Erreichen einer für die Wärmeübertragung notwendigen Temperaturdifferenz sehr kalt sein muss, insbesondere kälter als die Umgebung. In der Folge wird eine Abtauung notwendig, die wiederum sehr energieintensiv sein kann. Die Abtauung wird umso energieintensiver, wenn während des Abtauens noch Außenluft an den Wärmeübertrager gelangt und für die Abtauung bereitgestellte Wärmeenergie von der Außenluft aufgenommen wird. Dies stellt insbesondere bei elektrischen Kraftfahrzeugen ein Problem mit Hinblick auf die Reichweite dar.

Ein Verfahren zur Steuerung einer Enteisungseinrichtung an einem Kraftfahrzeug ist beispielsweise aus der DE 10 2012 207 925 A1 bekannt. Dabei erfolgt ein Erfassen eines geplanten Benutzungsbeginns des Kraftfahrzeugs, ein Erfassen von meteorologischen Informationen am Standort des Kraftfahrzeugs, ein Bestimmen einer Notwendigkeit zur Enteisung und eine Veranlassen der Enteisung so, dass die Enteisung zum geplanten Benutzungsbeginn abgeschlossen ist.

Die DE 10 2014 102 078 A1 beschreibt ein weiteres Verfahren zum Abtauen eines Wärmeübertragers einer Klimaanlage eines Kraftfahrzeugs unter Umschalten von einem Wärmepumpenmodus in einen Abtaumodus. In dem Verfahren erfolgt das Abtauen bei Stillstand oder geringen Geschwindigkeiten des Kraftfahrzeugs.

WO 2018/124788 A1 offenbart ein Verfahren zum Betrieb einer Wärmepumpe eines elektrischen Kraftfahrzeuges, in dem die betriebene Wärmepumpe einen Außenluftwärmeübertrager umfasst und in dem die Wärmepumpe zumindest zeitweise in einem Betriebsmodus betrieben wird, in welchem eine Eisbildung an dem Außenluftwärmeübertrager erfolgt und der Außenluftwärmeübertrager dann abgetaut wird.

DE 10 2011 076 897 A1 offenbart eine Temperaturregelungsvorrichtung zur Verbesserung der Leistungsfähigkeit der Klimatisierung von Elektrofahrzeugen. Eine Wärmepumpe kann von einem Heizbetrieb auf einen Abtaumodus umgeschaltet werden. Im Abtaumodus der Wärmepumpe wird Kühlwasser eines elektrischen Antriebes des Fahrzeuges zur Temperierung eines Fahrzeuginnenraumes mit genutzt.

Der Erfindung liegt nun die Aufgabe zugrunde, eine technische Lösung bereitzustellen, mit der in einem elektrischen Kraftfahrzeug eine effiziente und effektive Abtauung des Wärmeübertragers nach der Vereisung möglich ist.

Die Aufgabe wird durch den Gegenstand des unabhängigen Patentanspruchs 1 gelöst. Weitere bevorzugte Ausgestaltungen der Erfindung ergeben sich aus den übrigen, in den Unteransprüchen genannten Merkmalen.

Ein erster Aspekt der Erfindung betrifft ein Verfahren zum Betrieb einer Wärmepumpe eines elektrischen Kraftfahrzeugs, in dem die betriebene Wärmepumpe einen Außenluftwärmeübertrager umfasst und in dem die Wärmepumpe zumindest zeitweise in einem Betriebsmodus betrieben wird, in welchem eine Eisbildung beziehungsweise Reifbildung an dem Außenluftwärmeübertrager erfolgt und der Außenluftwärmeübertrager dann abgetaut wird.

Erfindungsgemäß ist vorgesehen, dass die Abtauung mit einer Heizleistung wenigstens 1 kW erfolgt und zur Abtauung des Außenluftwärmeübertragers die Wärmepumpe in einem Betriebsmodus betrieben wird, in dem Wärme aus einer Batterie oder einer anderen Traktionskomponente des Kraftfahrzeugs entnommen wird.

Bevorzugt beträgt die Heizleistung wenigstens 3 kW, weiterhin bevorzugt wenigstens 5 kW.

Entgegen dem konventionell verfolgten Grundsatz, Systeme in einem elektrischen Kraftfahrzeug mit möglichst geringer Leistung zu betreiben, haben Versuche der Anmelder ergeben, dass die erfindungsgemäß hohen Leistungen für die Abtauung die Abtauzeit derart reduzieren können, dass dennoch eine größtmögliche Gesamteffizienz erreicht wird. Dabei wirkt sich positiv aus, dass aufgrund der sehr schnellen Abtauung eine Menge an Außenluft, die den Außenluftwärmeübertrager während der Fahrt umströmt, und damit der Wärmeverlust, deutlich reduziert werden.

Durch die Entnahme der Wärme aus der Batterie, vorzugsweise durch eine Verdampfung eines Kältemittels in der Batterie oder einem sekundären Wasserkreislauf, beispielsweise einer Anbindung der Batterie beziehungsweise Traktionskomponenten über einen Wärmeübertrager, kann die Leistung gegenüber anderen Wärmequellen deutlich gesteigert werden. Hier ist vor allem das generell erhöhte Temperaturniveau der Batterie gegenüber zum Beispiel der Umgebungsluft von Vorteil. Ebenfalls ist die thermische Masse der Batterie oder auch des Elektromotors groß, so dass die hohe Leistung über eine längere Zeit entnommen werden kann, ohne dass sich die Komponenten signifikant abkühlen. Ein hohes Temperaturniveau, auf dem die Wärme entnommen werden kann, ist über einen erhöhten Saugdruck vorteilhaft für die zur Verfügung stehende Leistung.

In weiterhin bevorzugter Ausgestaltung des Verfahrens der Erfindung ist vorgesehen, dass über ein elektrisches Heizelement in einem Kühlsystem einer Traktionskomponente des Kraftfahrzeugs mindestens eine durch die Wärmepumpe entnommene Leistung kompensiert wird, so dass eine Abkühlung der Traktionskomponente vermieden wird.

Somit kann ohne einen Einfluss auf die Traktionskomponenten die Wärme entnommen werden, da die Wärme durch einen elektrischen Heizer zugeführt wird.

In weiterhin bevorzugter Ausgestaltung des Verfahrens der Erfindung ist vorgesehen, dass für die Abtauung ein Luftmassenstrom durch den Außenluftwärmeübertrager reduziert wird.

Der Energieverlust dadurch, dass von der zugeführten Wärme ein Teil an den Außenluftstrom abgegeben wird, kann so zusätzlich reduziert werden. Die Erwärmung dient somit vorrangig dem Schmelzen des Eises, wodurch die Abtauung noch effizienter wird. Somit wird der eingangs beschriebene positive Effekt der hohen Leistung am Wärmeübertrager beim Abtauen verstärkt.

In weiterhin bevorzugter Ausgestaltung des Verfahrens der Erfindung ist vorgesehen, dass der Luftmassenstrom durch ein Schließen einer Absperrvorrichtung vor dem Außenluftwärmeübertrager erfolgt.

Die Absperrvorrichtung kann beispielsweise eine Kühlerjalousie umfassen. Der Luftmassenstrom kann damit sogar vollständig abgesperrt werden, so dass der vorangehend beschriebene positive Effekt deutlich verstärkt wird.

In weiterhin bevorzugter Ausgestaltung des Verfahrens der Erfindung ist vorgesehen, dass der Luftmassenstrom durch zumindest teilweise Kompensation einer Luftdruckdifferenz vor und hinter dem Außenluftwärmeübertrager unter Nutzung eines Gebläses erfolgt.

Beispielsweise kann eine Drehrichtung eines Kühlerventilators des Kraftfahrzeugs umgekehrt werden und Luft entgegen der Fahrtrichtung fördern. Dem einströmenden Strom von Außenluft kann so entgegengewirkt werden. Dies ist vor allem auch dann vorteilhaft, wenn beispielsweise keine Kühlerjalousie vorhanden ist.

Nochmals mit anderen Worten zusammengefasst betrifft die Erfindung ein Verfahren zum Abtauen eines Außenluftwärmeübertragers eines Elektrofahrzeugs. Entgegen dem konventionell verfolgten Grundsatz, Systeme in einem elektrischen Kraftfahrzeug mit möglichst geringer Leistung zu betreiben, ist vorgesehen, dass hohe Leistungen für die Abtauung zur Reduktion der Abtauzeit und damit des Wärmeverlusts verwendet werden.

Die verschiedenen, in dieser Anmeldung genannten Ausführungsformen der Erfindung sind, sofern im Einzelfall nicht anders ausgeführt, mit Vorteil miteinander kombinierbar.

## Patentansprüche

1. Verfahren zum Betrieb einer Wärmepumpe eines elektrischen Kraftfahrzeugs, in dem die betriebene Wärmepumpe einen Außenluftwärmeübertrager umfasst und in dem die Wärmepumpe zumindest zeitweise in einem Betriebsmodus betrieben wird, in welchem eine Eisbildung an dem Außenluftwärmeübertrager erfolgt und der Außenluftwärmeübertrager dann abgetaut wird, **dadurch gekennzeichnet, dass** die Abtauung mit einer Heizleistung wenigstens 1 kW erfolgt und zur Abtauung des Außenluftwärmeübertragers die Wärmepumpe in einem Betriebsmodus betrieben wird, in dem Wärme aus einer Batterie oder einer anderen Traktionskomponente des Kraftfahrzeugs entnommen wird.

2. Verfahren nach Anspruch 1, **dadurch gekennzeichnet, dass** über ein elektrisches Heizelement in einem Kühlsystem einer Traktionskomponente des Kraftfahrzeugs mindestens eine durch die Wärmepumpe entnommene Leistung kompensiert wird, so dass eine Abkühlung der Traktionskomponente vermieden wird.

3. Verfahren nach einem der vorhergehenden Ansprüche, **dadurch gekennzeichnet, dass** für die Abtauung ein Luftmassenstrom durch den Außenluftwärmeübertrager reduziert wird.

4. Verfahren nach Anspruch 3, **dadurch gekennzeichnet, dass** der Luftmassenstrom durch ein Schließen einer Absperrvorrichtung vor dem Außenluftwärmeübertrager erfolgt.

5. Verfahren nach Anspruch 3, **dadurch gekennzeichnet, dass** der Luftmassenstrom durch zumindest teilweise Kompensation einer Luftdruckdifferenz vor und hinter dem Außenluftwärmeübertrager unter Nutzung eines Gebläses erfolgt.

## Claims

1. Method for operating a heat pump of an electric motor vehicle, in which the operated heat pump comprises an outside-air heat exchanger and in which the heat pump is at least intermittently operated in an operating mode in which ice is formed on the outside-air heat exchanger and the outside-air heat exchanger is then thawed, **characterized in that** the thawing is carried out using a heating power of at least 1 kW, and, for thawing the outside-air heat exchanger, the heat pump is operated in an operating mode in which heat is extracted from a battery or some other traction component of the motor vehicle.

2. Method according to Claim 1, **characterized in that**, via an electrical heating element in a cooling system of a traction component of the motor vehicle, at least a power extracted by the heat pump is compensated, so that cooling of the traction component is avoided.

3. Method according to either of the preceding claims, **characterized in that**, for the thawing, an air-mass flow through the outside-air heat exchanger is reduced.

4. Method according to Claim 3, **characterized in that** the air-mass flow is realized by closure of a shutoff device in front of the outside-air heat exchanger.

5. Method according to Claim 3, **characterized in that** the air-mass flow is realized by at least partial compensation of a difference in air pressure in front of and behind the outside-air heat exchanger using a blower.

## Revendications

1. Procédé de fonctionnement d'une pompe à chaleur d'un véhicule automobile électrique, procédé dans lequel la pompe à chaleur actionnée comprend un échangeur de chaleur à air extérieur et dans lequel la pompe à chaleur fonctionne au moins temporairement dans un mode de fonctionnement dans lequel de la glace se forme sur l'échangeur de chaleur à air extérieur et l'échangeur de chaleur à air extérieur est ensuite dégivré, **caractérisé en ce que** le dégivrage est effectué à une puissance de chauffage d'au moins 1 kW et, pour dégivrer l'échangeur de chaleur à air extérieur, la pompe à chaleur fonctionne dans un mode de fonctionnement dans lequel de la chaleur est prélevée sur une batterie ou un autre composant de traction du véhicule automobile.

2. Procédé selon la revendication 1, **caractérisé en ce qu'**au moins une puissance consommée par la pompe à chaleur est compensée par le biais d'un élément chauffant électrique dans un système de refroidissement d'un composant de traction du véhicule automobile, de façon à éviter le refroidissement du composant de traction.

3. Procédé selon l'une des revendications précédentes, **caractérisé en ce qu'**un débit massique d'air à travers l'échangeur de chaleur à air extérieur est réduit en vue du dégivrage.

4. Procédé selon la revendication 3, **caractérisé en ce que** le débit massique d'air est effectué par fermeture d'un dispositif d'arrêt en amont de l'échangeur de chaleur à air extérieur.

5. Procédé selon la revendication 3, **caractérisé en ce que** le débit massique d'air est effectué par compensation au moins partielle d'une différence de pression d'air en amont et en aval de l'échangeur de chaleur à air extérieur à l'aide d'une soufflante.
